# EUROPEAN PATENT SPECIFICATION

(11) **EP 1 972 471 B1**
(45) Date of publication and mention of the grant of the patent: **23.05.2012**
(21) Application number: 08102831.8
(22) Date of filing: 20.03.2008
(51) Int. Cl.: B60G 9/02

(54) **Active axle suspension system**
Aktives Achsenaufhängungssystem
Système de suspension active

(30) Priority: 22.03.2007 US 689610; 22.03.2007 US 689611
(43) Date of publication of application: 24.09.2008
(73) Proprietor: CNH Italia S.p.A., 10135 Torino (IT)
(72) Inventor: Bordini, Giorgio, 41043, Formigine, Modena (IT); Rach, David T., Plainfield, IL 60544 (US); Panettone, Loreto, Yorkville, IL 60560 (US); Felsing, Brian E., Park Ridge, IL 60068 (US); Prasse, Robert C., Chicago, IL 60626 (US); Yi, Tong Y., Schaumburg, IL 60193 (US)
(74) Representative: CNH IP Department

(56) References cited:
- EP-A- 1 167 639
- WO-A-81/03466
- DE-A1- 19 528 517
- US-A- 5 879 016
- US-A1- 2006 038 371

## Description

The present invention relates generally to suspension systems for vehicles and more particularly to suspension systems for agricultural tractors and other off-road vehicles.

In the farm machinery sector, agricultural tractors are well-known typically comprising front and rear laterally extending axles having wheels rotatably affixed at the ends with a longitudinally elongated box body, or chassis, connecting the axles. Rear axles are commonly rigidly connected to the chassis; there is no suspension between the rear axle and the tractor frame. Tire deflection alone provides a cushioning between a rough surface and the tractor frame. In many tractors, the front wheels are driven in addition to the rear driven wheels, the tractor having four wheel drive. Economics and simplicity typically dictate that rigid front axle assemblies be used in lieu of an independently articulated front suspension. Front axles are typically hingeably attached to the front of the tractor chassis to rotate, transversely with respect to the longitudinal axis of the chassis, around a respective hinge axis located proximate to the longitudinal middle of the axle. With this axle structure, when one front wheel is raised to overcome an obstacle, the other front wheel has to come down the same distance.

The productivity of an agricultural tractor can be increased by enabling faster travel speeds in the field and on the road. Limiting factors to the travel speed of an agricultural tractor when traveling over rough surfaces are operator comfort and wheel traction. Faster travel speeds highlight shortcomings in the conventional hingeably-attached rigid front axle, especially when both wheels simultaneously encounter a similar obstacle, such as a ditch. When both wheels must move in the same direction to traverse an obstacle, the entire front end of the vehicle is forced to move in the same vertical direction.

Tractor front axle suspensions solve these problems by enabling the entire axle to move in relation to the tractor frame. By damping such motion, traction and operator comfort may be increased, both of which may contribute to increased productivity. WO 81/03466 A discloses an axle construction for tractors with an auxiliary frame fixed to axle bearings and a spring assembly between the frame and the auxiliary frame, permitting vertical yield of the auxiliary frame in relation to the frame of the vehicle. Additionally, front axle suspensions for tractors provide better high-speed handling characteristics during high-speed operation on roads. The addition of more sophisticated actuators and control systems to these suspension systems further extend the capabilities of the tractor and provide additional improvements in vehicle ride and handling.

It would be a great advantage to provide an active suspension system for a rigid beam tractor axle that increases traction, improves the ride and handling characteristics of the tractor, and provides sufficient wheel turning capability to retain accepted vehicle manoeuvrability, all while retaining a simple, cost-effective rigid front axle member to overcome the above problems and disadvantages.

Accordingly, it is an object of the present invention to provide a suspension system for an agricultural tractor axle improves ride quality while traversing uneven terrain.

It is a further object of the present invention to provide a suspension system for an agricultural tractor axle that dampens axle motion while allowing axle oscillation sufficient to maintain wheel contact with the ground while traversing uneven terrain.

It is a further object of the present invention to improve vehicle maneuverability by providing a suspension system capable of adjusting axle position in relation to the vehicle frame thereby enabling the steering wheels to be turned at greater angles.

It is a further object of the present invention to provide an axle suspension that improves tractor handling characteristics during high-speed roading.

It is a further object of the present invention to provide an axle suspension system capable of responding to extreme axle oscillations in order to limit impact stresses placed on the vehicle frame thereby improving ride quality and reducing the structural demands on the axle mounting frame.

It is a further object of the present invention to provide a tractor axle suspension capable of sharing an axle housing design with non-suspended tractors thereby reducing manufacturing complexity.

It is a still further object of the present invention to provide an axle suspension for a tractor that improves ride quality while traversing uneven terrain thereby reducing operator fatigue and increasing productivity.

It is a still further object of the present invention to provide an axle suspension that is durable in construction, inexpensive of manufacture, carefree of maintenance, easily assembled, and simple and effective to use.

According to the invention, a system according to claim 1 is provided. A suspension apparatus may comprise left and right suspension actuators, connecting the axle to the frame such that the actuators may modify the position of the wheels relative to the frame, and a control system may manage the suspension actuators in response to the contour of the ground thereby controlling pivoting of the axle about first and second axes.

The suspension actuators may be hydraulic cylinders. The guide member may be a roller. The control system may actuate the suspension actuators independently of one another.

The invention will now be described in further detail, by way of example, with reference to the accompanying drawings, in which:
FIGURE 1 is a side view of an agricultural tractor of the type which the present invention is advantageous;
FIGURE 2 is a partial perspective view of the frame and front axle of an agricultural tractor showing the preferred embodiment of the present invention;
FIGURE 3 is a side view of the present invention showing the axle carrier and its connections to the axle and frame;
FIGURE 4 is an exploded assembly view of the components comprising the axle carrier;
FIGURE 5 is a front view of the suspension apparatus as it would be positioned when the vehicle is on level ground;
FIGURE 6 is a front view of the suspension apparatus as it would be position when one of the wheels encounters a bump and shows how the apparatus improves the vehicle ride; and
FIGURE 7 is a schematic representation of a control system for the active suspension apparatus of the present invention.

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right," "up" or "down," or "top" or "bottom" are used as a matter of mere convenience, and are determined by standing at the rear of the machine facing in its normal direction of travel. Furthermore, the various components shown or described herein for any specific application of this invention can be varied or altered as anticipated by this invention and the practice of a specific application of any element may already be widely known or used in the art by persons skilled in the art and each will likewise not therefore be discussed in significant detail. When referring to the figures, like parts are numbered the same in all of the figures.

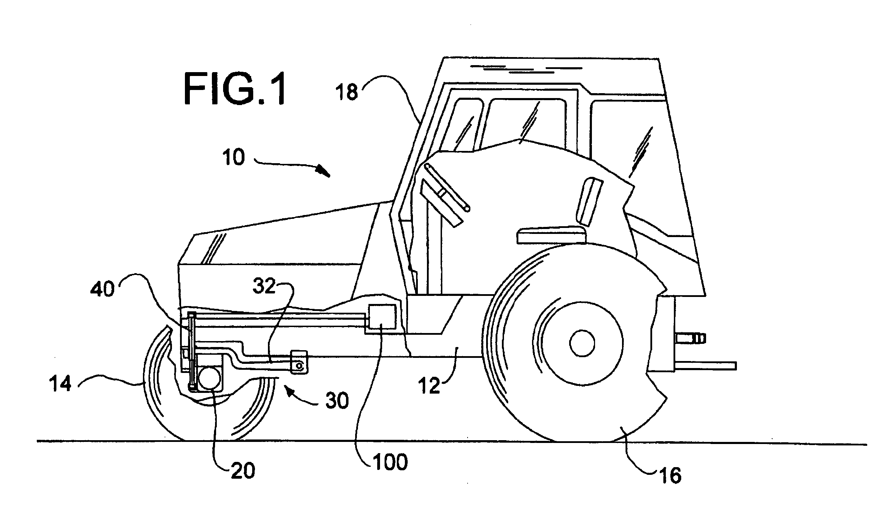

FIGURE 1 shows the primary components of a typical and generally well known agricultural tractor 10, namely a frame 12, front wheels 14 (only one shown), rear wheels 16 (only one shown), and an operator's cab 18. In a conventional tractor, front axle 20 is typically connected to chassis 12 by a centrally-positioned pin generally aligned with the longitudinal forward-rearward axis of the tractor that limits axle movement to pivoting about the axle pivot pin. Front wheels 14 (only one shown) are pivotably connected to left and right opposing ends of front axle 20, selective movement of which enables tractor 10 to be steered. The present invention improves upon a conventional high-centered mounted pivot for front axle 22 through the addition of suspension apparatus 30. In the present invention, axle pivot pin 22, instead of being connected directly to frame 12, is connected to an axle carrier 32 which itself is pivotally attached to frame 12 by carrier pivot 34 in a manner that allows axle pivot pin 22 to translate in upward and downward direction relative to frame 12. The orientation of carrier pivot 34 is generally perpendicular to the longitudinal forward-rearward axis of the tractor. Motion of front axle 20 is controlled by a pair of hydraulic cylinders 40 connected at one end to front axle 20 and to frame 12 at their opposing ends. Movement of hydraulic cylinders 40, whether extending or retracting, is directed by control system 100, which may comprise sensors, controllers, a fluid reservoir, a pump, and the necessary hydraulic valves to direct axle 20 movement in relation to the frame 12.

Hydraulic cylinders 40 are described in the preferred embodiment as an economical solution as most tractors are equipped with hydraulic systems capable of providing the motive force to actuate the cylinders. Other types of actuators (e.g., pneumatic, electromagnetic and the like) offering similar functionality, that is capable of selective extension and retraction while providing sufficient force, may be used with the present invention. Vehicles having on-board pneumatic systems or adequate electrical power can easily use these alternative means of motive force for the suspension actuators. The description herein describes hydraulic actuators as the preferred embodiment as a matter of convenience. Use of such similarly functional actuators is not precluded by and is anticipated by this disclosure.

A skilled designer will also note that the invention as described herein for application on a front axle may also be applied to rear or intermediate axles on a vehicle with similar effectiveness. Such application is contemplated within the scope of the present invention. The description continues as applicable to a front axle for clarity and convenience.

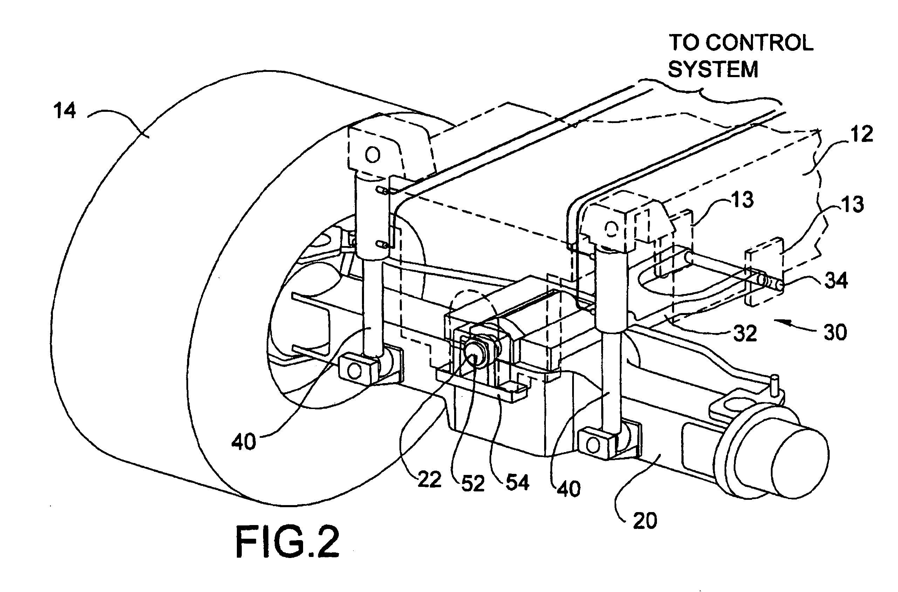

Now referring to FIGURE 2, a partial isometric view of suspension apparatus 30 shows the connection of front axle 22 to axle carrier 32 in greater detail. The rearward portion of carrier 32 is connected to frame 12 by carrier pivot 34. The forward portion of carrier 32 provides a connection for front axle pivot pin 22. As carrier 32 pivots about carrier pivot 34, front axle pivot pin 22 moves in generally upward/downward directions relative to frame 12. Vertical movement of front axle 20 is used to lessen the impact to the tractor when the front wheels 14 encounter obstacles that require them to simultaneously move in the same direction. This vertical axle pivot movement also allows the tractor frame 12 to remain at a generally consistent distance from the ground when one wheel encounters an obstacle; rather than forcing the frame upward as the opposing wheel is forced downward, movement of the carrier maintains the frame in a generally constant location.

Upward/downward movement of axle 20 is limited by a guide member 52 and a guide member receiving structure, referred to as travel limiter 54. In the preferred embodiment, guide member 52 is a portion of front axle pivot pin 22 extending beyond the pivot connections of the front axle 20 and the axle carrier 32. Travel limiter 54 constrains motion of guide member 52 to generally upward/downward directions, relative to the tractor, thereby limiting lateral loading on the carrier pivot 34 and enabling a less robust structure to be used for the carrier and carrier pivot. Axle carrier 32 in the preferred embodiment is laterally narrow, preferably no wider than the tractor frame 12 in the same longitudinal region, so that the degree to which the front wheels 12 may be steered in right or left directions is unaffected by the addition of the suspension apparatus 30. Travel limiter 54 allows front axle 20 to move vertically through a limited range of motion.

A designer skilful in the art may develop other functionally equivalent mechanisms capable of providing the necessary lateral and vertical restraint for the axle carrier 32. One alternate embodiment relies on a guide member in the form of rollers positioned on the sides of axle carrier 32 proximate to the forward end of the carrier interacting with receiving structures on the frame 12 to guide the rollers and provide necessary lateral restraint of carrier 32. In another embodiment, the location of the guide members (rollers) and receiving structure could be reversed thereby locating rollers on the frame 12. Vertical travel limiter 54 may be provided in a structure separate from the guide member in the form of a contact point between frame 12 and axle carrier 32 or by incorporating limits into the hydraulic cylinders. In some embodiments, one or both rigid vertical travel limiters may be omitted entirely, whereby limits for axle and axle carrier motion rely fully on the range of motion permitted by the hydraulic cylinders. Each of these alternate embodiments as well as other functionally equivalent design is contemplated within this disclosure and fall within the scope of the present invention.

Front axle 20 motion is further controlled by a pair of hydraulic cylinders 40, positioned one on either side of the front axle pivot pin 22. In a first embodiment hydraulic cylinders 40 are preferably single-acting cylinders that position guide member 52 in a neutral position within travel limiter 54, that is when guide member 52 is located at an intermediate position within the range allowed by travel limiter 54. Hydraulic cylinders 40 are allowed to retract and extend independently as the conditions created by vehicle movement over the ground require. In a second embodiment hydraulic cylinders 40 are preferably double-acting cylinders capable of moving axle 20 in either direction regardless of the then-present loading on the axle. Hydraulic cylinders 40 are retracted and extended independently as the conditions created by vehicle movement over the ground require. As the tractor moves along the ground and the wheels engage an obstacle, front wheels 14 may move vertically by pivoting of front axle 20 about front axle pivot pin 22. The control system, sensing changes in wheel position, responds by adjusting one or both hydraulic cylinders 40. By positioning guide member 52 in an intermediate position within travel limiter 54, front axle 20 may move vertically in an upward or downward direction responsive to obstacles encountered by front wheels 14 thereby allowing the vehicle frame height above the ground to remain generally unchanged and preventing vehicle pitching due to the obstacle.

The hydraulic cylinders 40 are separately controlled by a control system 100 (shown in FIGS 1, 5 and 6). By adjusting the pressure and flow of hydraulic fluid to each cylinder, the control system allows each front wheel to act independently as it engages a bump or a hole in the ground. When one wheel rises over a bump, the hydraulic cylinder 40 on that side will be adjusted to allow the axle 20 to pivot (or oscillate). To prevent the opposing wheel from being forced to oscillate in the opposite direction, the hydraulic cylinder 40 on the side engaging the bump will also allow the axle carrier 32 to pivot and adjust the position of the axle pivot pin 22. The opposing hydraulic cylinder is also adjusted as required to maintain near-equal loading on the tires, ensuring that both tires remain in contact with the ground and that the general position of the vehicle relative to the ground remains unchanged (e.g., the vehicle does not lurch upward as it passes the bump). As the hydraulic cylinders 40 are capable of powered movement in two directions (extension and retraction), the control system 100 may be programmed to "lift" a wheel encountering a bump thereby lessening the impact of the bump sensed by the tractor operator.

Control system 100 receives inputs from the hydraulic cylinders 40, such as extended/retracted length and cylinder pressure, which are then used by the control system to determine the contour of the ground engaged by the wheels. Additional inputs from the operator may alter the sensitivity of the control system in response to the anticipated terrain undulations or may alter the static position of the axle carrier 32 for the then-present conditions. Other, more sophisticated alternatives employ additional sensors capable of reading the contour of the ground about to be engaged by the wheels and providing a signal to the control system. The control system can then anticipate the obstacles to be engaged by the wheels and initiate axle movements in a manner such that the wheel is moving at the same instant that it encounter the sensed obstacle.

The control system 100 may also be used to reposition hydraulic cylinders 40 to adjust the position of front axle 20 relative to frame 12 such that the forward/rearward pitch of the tractor can be altered. Such capability may be useful when a front end loader or other front-mounted implement is attached to the tractor, when additional ground clearance is needed, or during high speed road transport.

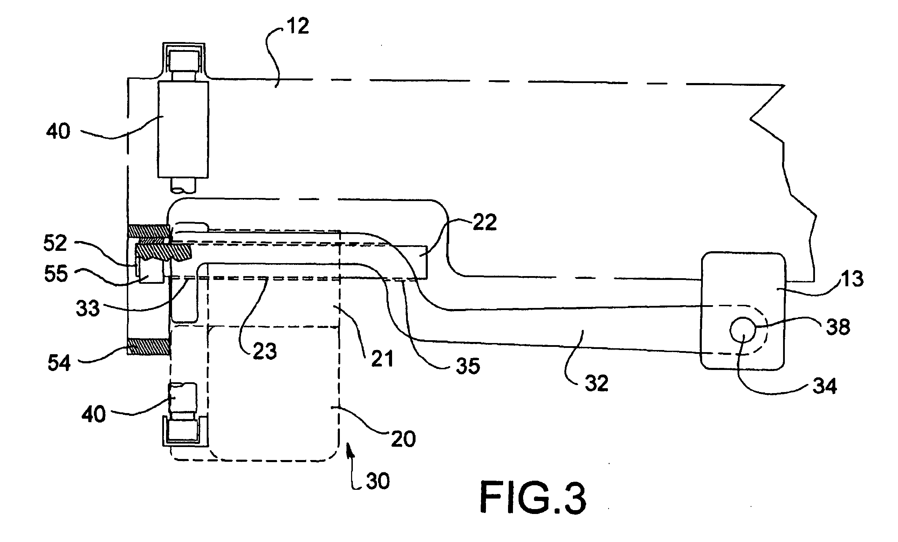

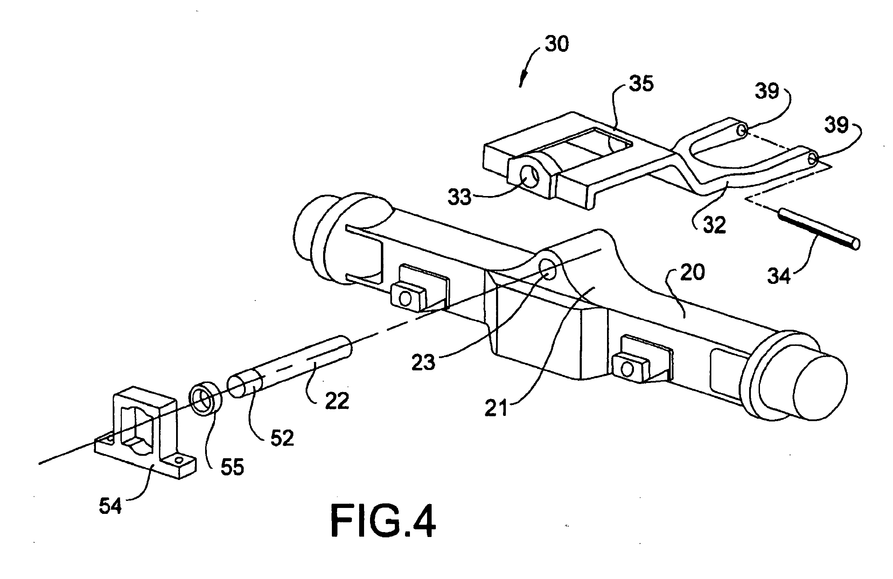

In FIGURE 3, a side elevation view of axle carrier 32 is shown connected to frame 12 by carrier mount 13 and carrier pivot 34. Carrier mounting structure 13 (also shown in FIGURE 2) may comprise one or more mounting holes 38 for receiving carrier pivot 34. Similar pivot mounting holes 39 (shown in FIGURE 4) are provided in axle carrier 32 and aligned so that a single pin 34 can pass through each bore to establish the pivoting connection. Carrier mounts 13 are spaced apart as allowed by the constraints of tractor frame 12 width to provide lateral torque-resistance. Other known pivot connection methods are contemplated, but a single pin used for carrier pivot 34 provides a simple, strong, and cost-effective means to provide the pivot connection.

Referring now to FIGURES 3 and 4, front axle 20 is a conventional high-pin rigid beam axle used on many agricultural tractors and other off-road vehicles. Center pivot mount 21 is positioned in the upper part of the casting that forms the body of axle 20 and comprises a cylindrical aperture 23 for receiving pivot pin 22. This pin 22 extends through the cylindrical aperture 23 and into two mating apertures 33, 35 in axle carrier 32 to pivotally connect the front axle 20 to axle carrier 32 in such a manner to enable front axle 20 to oscillate (pivot) about the axle pivot pin 22. The apertures 33, 35 in the axle carrier and the axle pivot aperture 23 are oriented generally parallel to the longitudinal forward-rearward axis of the vehicle. The design of the present invention enables one axle housing assembly to be used in both conventional high-pin center pivoting axles and in conjunction with the axle carrier 32 of the present invention to provide an additional degree of axle control thereby reducing manufacturing complexity and equipment cost. In the preferred embodiment, a portion of pivot pin 22 extends beyond the mounting and pivot structures of the axle-to-carrier connection and interacts with the receiving structure 54. This portion of pivot pin 22 extending beyond the forward carrier aperture 33 becomes the guide member 52. In the preferred embodiment, a roller 55 is connected to guide member to serve as a bearing thereby allowing guide member 52 to move more freely in vertical direction within the travel limiter 54 while allowing tighter clearances in the lateral direction.

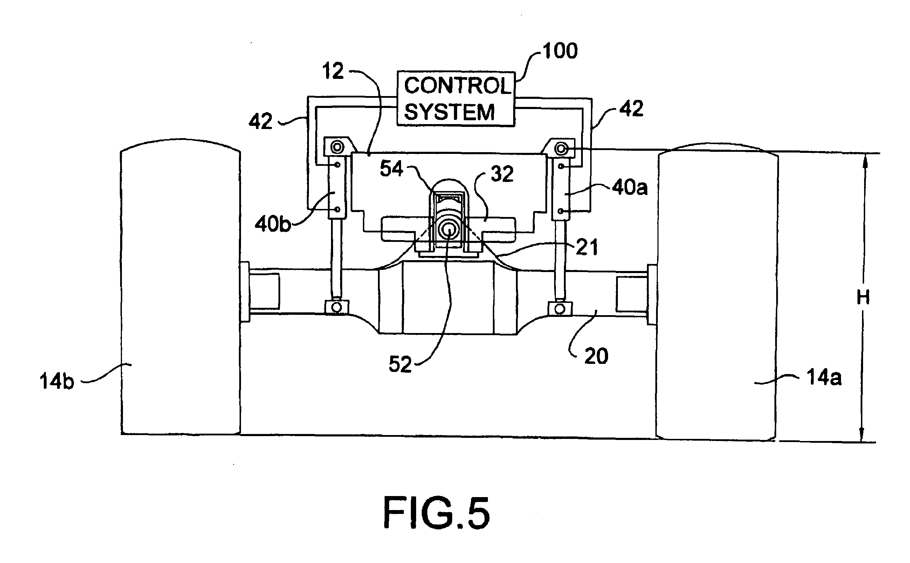

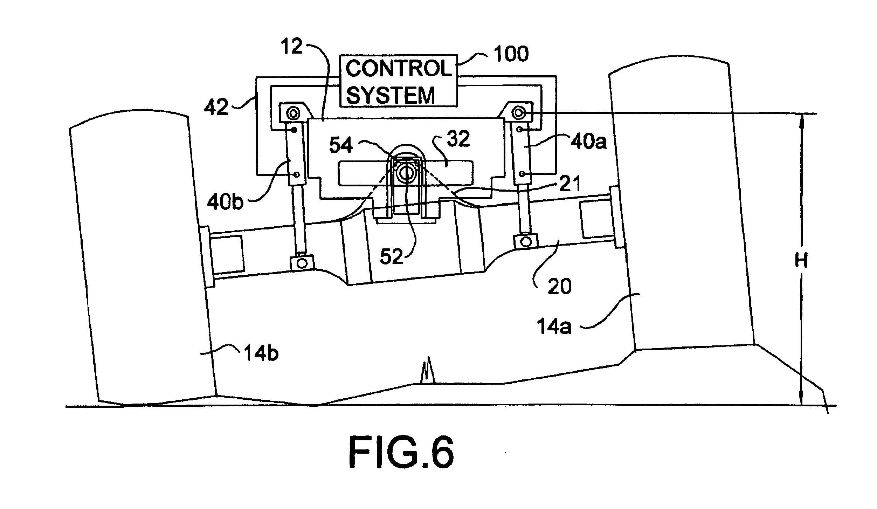

FIGURES 5 and 6 illustrate the response of the suspension apparatus as one wheel of the vehicle 10 encounters an obstacle. A simplified discussion of control system 100 is provided to illustrate how the suspension apparatus 30 responds. Those skilled in the art will recognize that numerous control philosophies and characteristics may be used with the present invention to improve vehicle suspension performance. Thus, this description is intended to illustrate rather than limit the disclosure. FIGURE 5 depicts the front axle 20 position as the vehicle is traveling across generally level terrain. The hydraulic cylinders 40 are extended so that guide member 52 is positioned toward the downward portion of travel limiter 54. For reference, a nominal vehicle frame height "H" is shown. When one wheel rises over a bump, as shown in FIGURE 6, the hydraulic cylinder 40a on that side will be adjusted by the hydraulic control system 100 to allow the axle 20 to pivot (or oscillate) in a manner allowing the wheel 14a to rise over the bump. To prevent the opposing wheel 14b from being forced to oscillate in the opposite direction (downward), axle carrier 32 is allowed to pivot so that the position of the axle pivot pin 22 moves upward. During this cycle, the control system adjusts hydraulic cylinders 40a, 40b, as required, to maintain near-equal loading on the tires, ensuring that both tires remain in contact with the ground and that the general position of the vehicle relative to the ground (dimension "H") remains unchanged (e.g., the vehicle does not lurch upward at it passes the bump). After passing the obstacle (bump), the control system 100 readjusts hydraulic cylinders 40a, 40b to return the suspension apparatus to the normal configuration as shown in FIGURE 5.

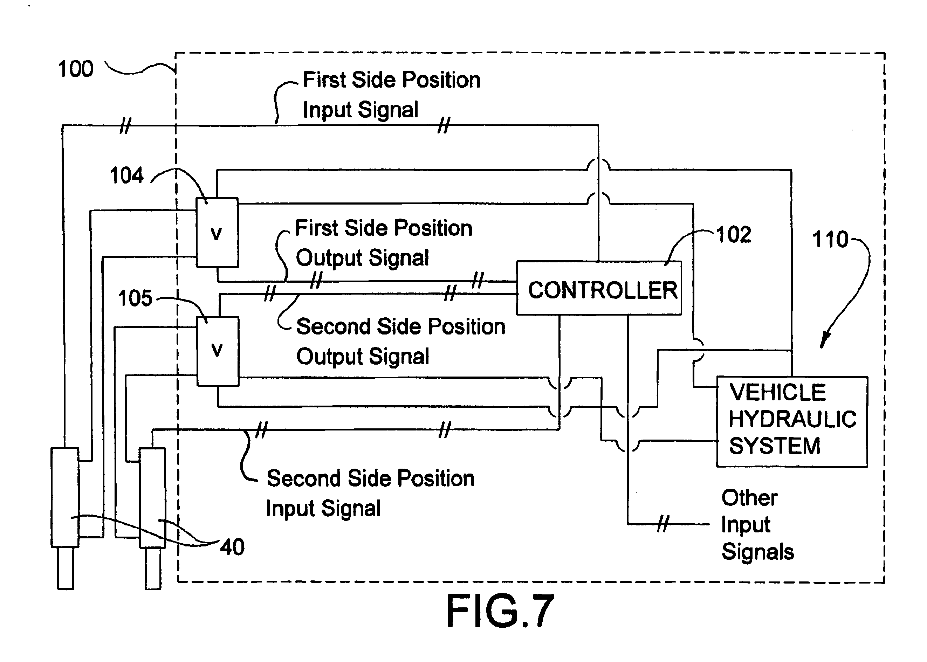

Finally, referring to FIGURE 7, a simplified schematic diagram of control system 100 showing first and second side hydraulic cylinders 40 which receive pressurized hydraulic fluid from control valves 104, 105. Flow of fluid for each hydraulic cylinder is directed through one of two control lines depending upon the desired direction of hydraulic cylinder 40 movement. Control valves 104, 105 are supplied by hydraulic system 110. The position of control valves 104, 105 is directed by controller 102 which receives various vehicle inputs and directs movement of hydraulic cylinders 40 through the operation of the control valves 104, 105. Vehicle inputs may include the position of each hydraulic cylinder 40 (e.g., extended/retracted length), hydraulic cylinder pressure, vehicle pitch angle, and vehicle roll angle. Using the inputs, the control system can determine the force between the wheel and the ground. The control system may also use changes in the readings to respond to changes in ground contour so that force between the wheels and the ground is maintained. More sophisticated control systems might employ terrain reading sensors to examine the approaching terrain and anticipate proper wheel positions to assure a smooth ride and maximum wheel contact with the ground. Terrain reading sensors include such sensors that physically detect ground contour to be encountered by the wheel (e.g., "feelers") as well as sensors capable of detecting ground contour without physical interaction, such as radars and the like.

## Claims

1. A suspension apparatus (30) for an axle of a vehicle, the vehicle (10) having a frame (12) with generally opposing forward and rearward ends defining a longitudinal axis, the suspension apparatus (30) comprising:
- an elongate axle carrier (32) having opposing first and second ends generally aligned with said longitudinal axis, a carrier mounting structure (13) affixed adjacent said second end, said mounting structure (13) connecting said carrier (32) to said frame (12) in a manner allowing said carrier (32) to pivot about a first axis generally transverse to said longitudinal axis, and an axle pivot structure (22) disposed adjacent said first end of said carrier (32) and affixed thereto, said axle pivot structure (22) aligned generally parallel to said longitudinal axis;
- an axle (20) having a laterally extending central portion with left and right ends and left and right wheels (14) connected respectively thereto for engagement with the ground, said axle (20) pivotally coupled to said axle pivot structure (22) to permit said axle (20) to pivot with respect to said axle carrier (32) about a second axis generally parallel to said longitudinal axis; and
- a guide member (52) disposed on said forward end of said carrier (32) engaging a receiving structure (54) connected to said frame (12), said guide member (52) interacting with said receiving structure (54) limiting relative motion of said axle carrier (32) to pivoting motion about said first axis; and
**characterized in that** said suspension apparatus (30) further comprises:
- left and right suspension actuators (40) connecting said left and right extending portions of said axle (20), respectively, to said frame (12), said suspension actuators (40) being selectively movable in first and second opposing directions and extendable or retractable to a desired length whereby extending or retracting selective said actuators (40) modifies the position of said left or right wheels (14) relative to said frame (12);
- a control system (100) for managing the position, extension and retraction, and the rate thereof, of said suspension actuators (40) in response to the contour of the ground engaged by or to be engaged by said wheels (14) thereby controlling pivoting of said axle (20) about said first and second axes; and
- said suspension actuators (40) are hydraulic cylinders.

2. A suspension apparatus (30) according to claim 1, **characterized in that** said guide member (52) is at least one roller (55).

3. A suspension apparatus (30) according to any of the preceding claims, **characterized in that** said control system (100) actuates said left and right suspension actuators (40) independently of one another.

4. A suspension apparatus (30) according to any of the preceding claims, **characterized in that** said control system (100) simultaneously controls pivotal motions of said axle (20) about said first and second axes.

5. A suspension apparatus (30) according to any of the preceding claims, **characterized in that** said suspension apparatus (30) further comprises left and right position signals, each said signal having a value corresponding to the said length of each respective said suspension actuator (40).

6. A suspension apparatus (30) according to any of the preceding claims, **characterized in that** said control system (100) actuates said left and right suspension actuators (40) independently of one another.

7. A suspension apparatus (30) according to any of the preceding claims, **characterized in that** said suspension apparatus (30) further comprises an apparatus for sensing the contour of the ground engaging each wheel (14) and communicating a signal to said control system (100).

8. A suspension apparatus (30) according to any of the preceding claims, **characterized in that** said suspension actuators are double-acting hydraulic cylinders.

9. A suspension apparatus (30) according to any of the claims 1 to 7, **characterized in that** said suspension actuators are single acting hydraulic cylinders.

## Patentansprüche

1. Aufhängungsvorrichtung (30) für eine Tragachse eines Fahrzeuges, wobei das Fahrzeug (10) einen Rahmen (12) mit allgemein entgegengesetzten vorderen und hinteren Enden aufweist, die eine Längsachse definieren, wobei die Aufhängungsvorrichtung (30) Folgendes umfasst:
- einen langgestreckten Achsträger (32) mit entgegengesetzten ersten und zweiten Enden, die allgemein mit der Längsachse ausgerichtet sind, eine Trägerbefestigungsstruktur (13), die benachbart zu dem zweiten Ende befestigt ist, wobei die Befestigungsstruktur (13) den Achsträger (32) mit dem Rahmen (12) in einer Weise verbindet, die ein Schwenken des Achsträgers (32) um eine erste Achse allgemein quer zu der Längsachse ermöglicht, und eine Achs-Schwenkstruktur (22), die benachbart zu dem ersten Ende des Achsträgers (32) angeordnet und an diesem befestigt ist, wobei die Achs-Schwenkstruktur (22) allgemein parallel zu der Längsachse ausgerichtet ist;
- eine Tragachse (20) mit einem sich quer erstreckenden Mittelteil mit linken und rechten Enden und linken und rechten Rädern (14), die mit diesen jeweils verbunden sind, um auf dem Boden abzurollen, wobei die Tragachse (20) schwenkbar mit der Achs-Schwenkstruktur (22) verbunden ist, um ein Schwenken der Tragachse (20) gegenüber dem Achsträger (32) um eine zweite Achse allgemein parallel zu der Längsachse zu ermöglichen; und
- ein Führungsbauteil (52), das an dem vorderen Ende des Achsträgers (32) angeordnet ist und mit einer Aufnahmestruktur (54) in Eingriff steht, die mit dem Rahmen (12) verbunden ist, wobei das Führungsbauteil (52) mit der Aufnahmestruktur (54) in Wechselwirkung steht und die Relativbewegung des Achsträgers (32) auf eine Schwenkbewegung um die erste Achse begrenzt; und **dadurch gekennzeichnet, dass** die Aufhängungsvorrichtung (30) weiterhin Folgendes umfasst:
- Linke und rechte Aufhängungs-Stellglieder (40), die die sich links beziehungsweise rechts erstreckenden Teile der Tragachse (20) mit dem Rahmen (12) verbinden, wobei die Aufhängungs-Stellglieder (40) selektiv in ersten und zweiten entgegengesetzten Richtungen beweglich und auf eine gewünschte Länge ausfahrbar oder einziehbar sind, wobei ein Ausfahren oder Einziehen ausgewählter der Stellglieder (40) die Position der linken oder rechten Räder (14) gegenüber dem Rahmen (12) verändert;
- ein Steuersystem (100) zur Verwaltung der Position, des Ausfahrens und des Einfahrens und dessen Geschwindigkeit der Aufhängungs-Stellglieder (40) in Abhängigkeit von der Kontur des Bodens, mit dem die Räder (14) in Eingriff stehen oder in Eingriff kommen sollen, wodurch ein Verschwenken der Tragachse (20) um die ersten und zweiten Achsen gesteuert wird; und
- wobei die Aufhängungs-Stellglieder (40) Hydraulikzylinder sind.

2. Aufhängungsvorrichtung (30) nach Anspruch 1, **dadurch gekennzeichnet, dass** das Führungsbauteil (52) zumindest eine Rolle (55) ist.

3. Aufhängungsvorrichtung (30) nach einem der vorhergehenden Ansprüche, **dadurch gekennzeichnet, dass** das Steuersystem (100) die linken und rechten Aufhängungs-Stellglieder (40) unabhängig voneinander betätigt.

4. Aufhängungsvorrichtung (30) nach einem der vorhergehenden Ansprüche, **dadurch gekennzeichnet, dass** das Steuersystem (100) gleichzeitig die Schwenkbewegungen der Tragachse (20) um die ersten und zweiten Achsen steuert.

5. Aufhängungsvorrichtung (30) nach einem der vorhergehenden Ansprüche, **dadurch gekennzeichnet, dass** die Aufhängungsvorrichtung (30) weiterhin linke und rechte Positionssignale umfasst, wobei jedes Signal einen Wert aufweist, der der Länge jedes jeweiligen Aufhängungsstellgliedes (40) entspricht.

6. Aufhängungsvorrichtung (30) nach einem der vorhergehenden Ansprüche, **dadurch gekennzeichnet, dass** das Steuersystem (100) die linken und rechten Aufhängungs-Stellglieder (40) unabhängig voneinander betätigt.

7. Aufhängungsvorrichtung (30) nach einem der vorhergehenden Ansprüche, **dadurch gekennzeichnet, dass** die Aufhängungsvorrichtung (30) weiterhin eine Vorrichtung zum Abtasten der Kontur des Bodens umfasst, der mit jedem Rad (14) in Eingriff kommt, sowie zur Übermittlung eines Signals an das Steuersystem (100).

8. Aufhängungsvorrichtung (30) nach einem der vorhergehenden Ansprüche, **dadurch gekennzeichnet, dass** die Aufhängungs-Stellglieder doppelt wirkende Hydraulikzylinder sind.

9. Aufhängungsvorrichtung (30) nach einem der Ansprüche 1 bis 7, **dadurch gekennzeichnet, dass** die Aufhängungs-Stellglieder einfach wirkende Hydraulikzylinder sind.

## Revendications

1. Dispositif de suspension (30) pour un essieu d' un véhicule, le véhicule (10) comportant un châssis (12) ayant des extrémités arrière et avant généralement opposées définissant un axe longitudinal, le dispositif de suspension (30) comprenant :
- un support d' essieu allongé (32) ayant des première et seconde extrémités opposées généralement alignées avec ledit axe longitudinal, une structure de montage du support (13) fixée en position adjacente à ladite seconde extrémité, ladite structure de montage (13) accouplant ledit support (32) au dit châssis (12) de manière à permettre au dit support (32) de pivoter autour d' un premier axe généralement transversal au dit axe longitudinal, et une structure de pivot d' essieu (22) disposée de façon adjacente à ladite première extrémité du dit support (32) et fixée sur celle-ci, ladite structure de pivot d' essieu (22) étant alignée sensiblement parallèlement au dit axe longitudinal,
- un essieu (20) comportant une partie centrale s' étendant latéralement et ayant des extrémités gauche et droite et des roues gauche et droite (14) accouplées respectivement à celles-ci pour être en prise sur le sol, ledit essieu (20) étant accouplé de façon pivotante à ladite structure de pivot (22) pour permettre au dit essieu (20) de pivoter par rapport au support d' essieu (22) autour d' un second axe généralement parallèle au dit axe longitudinal, et
- un élément de guidage (52) disposé sur ladite extrémité avant du dit support (32) engageant une structure de réception (54) accouplée au dit châssis (12), ledit élément de guidage (52) interagissant avec ladite structure de réception (54) en limitant le mouvement relatif du dit support d' essieu (32) à un mouvement de pivotement autour du dit premier axe, et
**caractérisé en ce que** le dispositif de suspension (30) comprend en plus :
- des actionneurs de suspension gauche et droite (40) accouplant respectivement lesdites parties s' étendant à gauche et à droite du dit essieu (20) au dit châssis (12), les dits actionneurs de suspension (40) étant sélectivement mobiles dans des première et seconde directions opposées et extensibles ou rétractables à une longueur souhaitée, au moyen de quoi l'extension ou la rétraction sélective des dits actionneurs (40) modifie la position des dites roues gauche ou droite (14) par rapport au dit châssis (12),
- un système de commande (100) destiné à gérer la position, l'extension et la rétraction ainsi que leur taux des dits actionneurs de suspension (40) en réponse au profil du sol engagé par ou à engager par lesdites roues (14), en commandant par ce moyen le pivotement du dit essieu (20) autour des dits premier et second axes, et
- les dits actionneurs de suspension (40) sont des vérins hydrauliques.

2. Dispositif de suspension (30) selon la revendication 1, **caractérisé en ce que** ledit élément de guidage (52) est au moins un palier (55).

3. Dispositif de suspension (30) selon l'une quelconque des revendications précédentes, **caractérisé en ce que** ledit système de commande (100) actionne les dits actionneurs de suspension (40) gauche et droite indépendamment l'un de l'autre.

4. Dispositif de suspension (30) selon l'une quelconque des revendications précédentes, **caractérisé en ce que** ledit système de commande (100) commande simultanément des mouvements de pivotement du dit essieu (20) autour des dits premier et second axes.

5. Dispositif de suspension (30) selon l'une quelconque des revendications précédentes, **caractérisé en ce que** ledit dispositif de suspension (30) comprend en plus des signaux de position gauche et droite, chaque dit signal ayant une valeur correspondant à ladite longueur de chacun des dits actionneurs de suspension respectifs (40).

6. Dispositif de suspension (30) selon l'une quelconque des revendications précédentes, **caractérisé en ce que** ledit système de commande (100) actionne les dits actionneurs de suspension (40) gauche et droite indépendamment l'un de l'autre.

7. Dispositif de suspension (30) selon l'une quelconque des revendications précédentes, **caractérisé en ce que** ledit dispositif de suspension (30) comprend en plus un dispositif pour détecter le profil de l'engagement au sol de chaque roue (14) et communiquer un signal au dit système de commande (100).

8. Dispositif de suspension (30) selon l'une quelconque des revendications précédentes, **caractérisé en ce que** lesdits actionneurs de suspension sont des vérins hydrauliques à double effet.

9. Dispositif de suspension (30) selon l'une quelconque des revendications précédentes 1 à 7, **caractérisé en ce** les dits actionneurs de suspension sont des vérins hydrauliques à simple effet.
